# EUROPÄISCHE PATENTSCHRIFT

(11) **EP 3 586 992 B1**
(45) Veröffentlichungstag und Bekanntmachung des Hinweises auf die Patenterteilung: **01.09.2021**
(21) Anmeldenummer: 19180786.6
(22) Anmeldetag: 18.06.2019
(51) Int. Cl.: B23B 31/20, B21D 51/26, B21D 22/30

(54) **KONIFIKATIONSSYSTEM AUFWEISEND EINE SPANNVORRICHTUNG ZUR FESTEN FIXIERUNG EINER AEROSOLDOSE WÄHREND EINER KONIFIZIERUNG DER AEROSOLDOSE UND VERWENDUNG EINER SPANNVORRICHTUNG EINES KONIFIKATIONSSYSTEMS ZUR FESTEN FIXIERUNG EINER AEROSOLDOSE WÄHREND EINER KONIFIZIERUNG DER AEROSOLDOSE**
CONIFICATION SYSTEM COMPRISING A CLAMPING DEVICE FOR FIRMLY FIXING AN AEROSOL CAN DURING A CONIFICATION OF THE AEROSOL CAN AND USE OF A CLAMPING DEVICE OF A CONIFICATION SYSTEM FOR FIRMLY FIXING AN AEROSOL CAN DURING A CONIFICATION OF THE AEROSOL CAN
SYSTÈME DE CONIFICATION COMPRENANT UN DISPOSITIF DE SERRAGE POUR FIXER FERMEMENT UNE BOMBE AÉROSOL PENDANT UNE CONIFICATION DE LA BOMBE AÉROSOL ET UTILISATION D'UN DISPOSITIF DE SERRAGE D'UN SYSTÈME DE CONIFICATION POUR FIXER FERMEMENT UNE BOMBE AÉROSOL PENDANT UNE CONIFICATION DE LA BOMBE AÉROSOL

(30) Priorität: 27.06.2018 DE 102018210527
(43) Veröffentlichungstag der Anmeldung: 01.01.2020
(73) Patentinhaber: Tubex Holding GmbH, 72414 Rangendingen (DE)
(72) Erfinder: Richau, Wolfgang, 72414 Rangendingen (DE); Stumpp, Sebastian, 72145 Hirrlingen (DE); Wiest, Dietmar, 72414 Rangendingen (DE)
(74) Vertreter: Patentanwälte Ruff, Wilhelm, Beier, Dauster & Partner mbB

(56) Entgegenhaltungen:
- EP-A2- 0 275 369
- WO-A1-2013/093801
- WO-A2-2005/011903
- DE-U1-202005 021 250
- GB-A- 1 411 713
- JP-A- H0 919 731
- US-A- 4 422 653

## Beschreibung

### ANWENDUNGSGEBIET UND STAND DER TECHNIK

Die Erfindung bezieht sich auf ein Konifikationssystem aufweisend eine Spannvorrichtung zur festen Fixierung einer Aerosoldose während einer Konifizierung der Aerosoldose und eine Verwendung einer solchen Spannvorrichtung eines solchen Konifikationssystems zur festen Fixierung einer Aerosoldose während einer Konifizierung der Aerosoldose.

Die DE 20 2005 021 250 U1 offenbart eine Arretiervorrichtung für Metallbehälter, die im Boden eine Vertiefung aufweisen und an den Behälterwänden verformt werden sollen mit folgenden Merkmalen: eine umlaufende Halterung mit einer an einem Ende angeordneten Öffnung zur Aufnahme eines Rückhaltekörpers; einen Ring, der an einer Aufnahmeöffnung für den Metallbehälter platziert ist, in welche die Behälter mit dem Boden voraus einbringbar sind, wobei der Ring mit elastischen Haltemitteln zusammenwirkt, die zwischen ihm und einem Zentrierungsbund angeordnet sind, der die Behälteraufnahmeöffnung umgibt und sie auch begrenzt; ein federbelasteter Ausstoßer, der entlang einer Längsachse der Vorrichtung angeordnet ist. Die Arretiervorrichtung ist dadurch gekennzeichnet, dass der Ring zum Zwecke der Formänderung der elastischen Haltemittel und der gewünschten Fixierung der Metallbehälter innerhalb der Vorrichtung verfahrbar ist und in der Behälteraufnahmeöffnung ein Zentrierungsring angeordnet ist, dessen dem Metallbehälter zugeordnete Stirnseite komplementär zu der im Boden des Behälters vorhandenen Vertiefung gestaltet und mit einer Vielzahl von Durchgangsbohrungen für ein Druckfluid ausgestattet ist und der Griffbereich ausgehend vom Boden des Behälters zwischen 10 und 30 mm ausgebildet ist. Des Weiteren ist die Arretiervorrichtung dadurch gekennzeichnet, dass der Ring verfahrbar gelagert ist, um die elastischen Haltemittel zur Fixierung der Metallbehälter in der Arretiervorrichtung zu beaufschlagen, beziehungsweise. zu lösen. Außerdem ist die Arretiervorrichtung dadurch gekennzeichnet, dass die Halterung einen Druckfluideinlass für den axial beweglichen Ring aufweist, um durch die Axialbewegung des Ringes die elastischen Haltemittel radial zu verformen.

Des Weiteren offenbart die WO 2005/011903 A2 ein Verfahren und eine Vorrichtung zum Vorbereiten zum Zwecke der Bearbeitung, um den Rundlauf zu verringern, des Flansches der Naben- und Lageranordnung, die zur Unterstützung der Bremsscheibe und des Rades eines Kraftfahrzeugs ausgelegt ist, wobei die Anordnung von dem Typ ist, bei dem die Nabe durch die Innenringe des Lagers verläuft, deren Außenring ohne Flansch ist, da er in ein Stützgehäuse der Fahrzeugaufhängung eingepasst werden soll. Das Verfahren und die fragliche Vorrichtung sind derart, dass, wenn die Anordnung auf dem Stützfutter angeordnet ist, um mit einer Werkzeugmaschine den Flansch der Nabe unter Verwendung eines beliebigen bekannten Verfahrens zu bearbeiten, der Außenring der Anordnung mit dem Spannfutter verbundenen Mitteln festgeklemmt wird, um einer radialen Druckspannung eines Typs und einer Größe ausgesetzt zu werden, die im Wesentlichen derjenigen entspricht, der der Außenring bei der Montage in dem Stützgehäuse der Aufhängung ausgesetzt wird, um das gesamte anfangs in der Anordnung vorhandene Spiel zu beseitigen, so dass letztere zum Zwecke des Rundlaufs im Wesentlichen unter den gleichen Bedingungen bearbeitet werden können, die während der letzten Arbeitsstufe vorliegen.

### AUFGABE UND LÖSUNG

Der Erfindung liegt als Aufgabe die Bereitstellung eines Konifikationssystems mit einer Spannvorrichtung zur festen Fixierung einer Aerosoldose während einer Konifizierung der Aerosoldose zugrunde, wobei die Spannvorrichtung eine schonende, insbesondere beschädigungsfreie, Fixierung der Aerosoldose und/oder eine relativ lange Lebensdauer der Spannvorrichtung ermöglicht. Des Weiteren liegt der Erfindung als Aufgabe die Bereitstellung einer Verwendung einer solchen Spannvorrichtung eines solchen Konifikationssystems zur festen Fixierung einer Aerosoldose während einer Konifizierung der Aerosoldose zugrunde.

Die Erfindung löst diese Aufgabe durch die Bereitstellung eines Konifikationssystems mit den Merkmalen des Anspruchs 1 und einer Verwendung einer Spannvorrichtung eines Konifikationssystems mit den Merkmalen des Anspruchs 13.

Das erfindungsgemäße, insbesondere automatische, Konifikationssystem beziehungsweise die Konifikationsmaschine weist, insbesondere mindestens, eine Spannvorrichtung zur festen Fixierung einer Aerosoldose und, insbesondere mindestens, eine, insbesondere automatische, Konifikationsvorrichtung auf.

Die, insbesondere automatische, Spannvorrichtung zur festen Fixierung der Aerosoldose während einer Konifizierung der Aerosoldose weist eine, insbesondere elastische, Spannhülse und eine, insbesondere von der Spannhülse verschiedene, elastische Verformungseinrichtung auf. Die Spannhülse weist einen innenseitigen Aufnahmeraum zur Aufnahme eines, insbesondere axialen, Abschnitts einer Umfangswand der Aerosoldose auf beziehungsweise definiert den Aufnahmeraum. Des Weiteren ist die Spannhülse zur, insbesondere elastischen, Veränderung beziehungsweise Verstellung zwischen einem Freigabezustand beziehungsweise einer Freigabestellung zur Freigabe der aufgenommenen Aerosoldose und einem Spannzustand beziehungsweise einer Spannzustellung zur Berührung und zur Beaufschlagung des Abschnitts der Umfangswand der aufgenommenen Aerosoldose mit einer, insbesondere radial, nach innen gerichteten Spannkraft ausgebildet. Die Verformungseinrichtung umfasst beziehungsweise umgibt die Spannhülse umfangsseitig beziehungsweise in Umfangsrichtung, insbesondere von außen beziehungsweise an einer Außenseite beziehungsweise einer Umfangswand der Spannhülse. Außerdem ist die Verformungseinrichtung zur elastischen Verformung, insbesondere radial, nach innen, insbesondere mit mindestens einem Teil, zur Veränderung der Spannhülse von ihrem Freigabezustand in ihren Spannzustand ausgebildet.

Die Spannvorrichtung weist eine, insbesondere hydraulische oder pneumatische, Fluidbeaufschlagungseinrichtung beziehungsweise Aktuierungseinrichtung auf. Die Fluidbeaufschlagungseinrichtung ist zur Beaufschlagung einer Außenseite der Verformungseinrichtung, insbesondere einer Membran, mit einem Fluid mit einem Druck zur Verformung der Verformungseinrichtung nach innen ausgebildet.

Die Konifikationsvorrichtung ist zur Konifizierung beziehungsweise Verengung beziehungsweise Verjüngung oder Aufweitung der fixierten Aerosoldose ausgebildet, insbesondere eines nicht fixierten Abschnitts, insbesondere der Umfangswand, der Aerosoldose, insbesondere eines offenen Endabschnitts.

Die Spannvorrichtung beziehungsweise ihre Spannhülse ermöglicht eine relativ großflächige Berührung und somit eine relativ großflächige Fixierung, insbesondere des Abschnitts der Umfangswand, der Aerosoldose. Somit kann sich die Spannkraft großflächig auf die Aerosoldose, insbesondere den Abschnitt der Umfangswand der Aerosoldose, verteilen und ein Spanndruck auf die Aerosoldose, insbesondere den Abschnitt der Umfangswand der Aerosoldose, kann relativ klein sein. Zusätzlich oder alternativ ermöglicht die Spannvorrichtung beziehungsweise ihre Spannhülse einen in Umfangsrichtung beziehungsweise entlang der Umfangswand, insbesondere an verschiedenen Umfangspositionen, gleichmäßigen beziehungsweise isotropen beziehungsweise uniformen beziehungsweise positionsunabhängigen Wert beziehungsweise Betrag der Spannkraft. Gleichmäßig kann bedeuten, dass eine Variation des Werts der Spannkraft, insbesondere zwischen verschiedenen Umfangspositionen, maximal 10 Prozent (%) sein kann, insbesondere maximal 5 %, insbesondere maximal 2 %, insbesondere maximal 1 %. Somit ermöglicht die Spannvorrichtung beziehungsweise ihre Spannhülse ein Risiko einer, insbesondere zeitlich dauerhaften, Deformation der Aerosoldose beziehungsweise einer, insbesondere zeitlich dauerhaften, Delle in der Aerosoldose zu reduzieren oder sogar zu vermeiden. Somit ermöglicht die Spannvorrichtung beziehungsweise ihre Spannhülse eine schonende, insbesondere beschädigungsfreie, Fixierung der Aerosoldose. Weiter zusätzlich oder alternativ ermöglicht die Spannvorrichtung beziehungsweise ihre Spannhülse eine, insbesondere während der Bearbeitung der Aerosoldose, eventuell auf die elastische Verformungseinrichtung wirkende Zugbelastung durch die Aerosoldose zu reduzieren oder sogar zu vermeiden. Somit ermöglicht die Spannvorrichtung beziehungsweise ihre Spannhülse eine Abnutzung der elastischen Verformungseinrichtung zu reduzieren oder sogar zu vermeiden. Somit ermöglicht die Spannvorrichtung beziehungsweise ihre Spannhülse eine relativ lange Lebensdauer der Verformungseinrichtung.

Insbesondere kann die Aerosoldose dünnwandig sein, insbesondere eine Dosen-Wandstärke im 0,1 bis 1 Millimeterbereich aufweisen, insbesondere von minimal 0,1 mm bis maximal 0,4 mm, insbesondere von minimal 0,2 mm bis maximal 0,3 mm. Zusätzlich oder alternativ kann die Aerosoldose als Sprühdose oder Spraydose bezeichnet werden. Weiter zusätzlich oder alternativ kann die Aerosoldose die Form eines einseitig offenen Zylinders, insbesondere eines Kreiszylinders, aufweisen. Die Aerosoldose kann mit einem, insbesondere geschlossenen, Boden voran in die Spannvorrichtung beziehungsweise ihre Spannhülse eingeführt werden. Der Abschnitt kann als Bodenabschnitt bezeichnet werden. Weiter zusätzlich oder alternativ kann die Umfangswand als Mantelwand bezeichnet werden.

Die fixierte Aerosoldose kann, insbesondere ohne dass sie ihre Position in der Spannvorrichtung beziehungsweise ihrer Spannhülse ändern kann, sich in der Spannvorrichtung beziehungsweise ihrer Spannhülse verschieben kann, drehen kann oder ähnliches, bearbeitet werden. Zusätzlich oder alternativ kann die Spannvorrichtung beziehungsweise ihre Spannhülse eine Außenbearbeitung, insbesondere einer Außenseite, der Aerosoldose ermöglichen. Insbesondere kann ein, insbesondere der, nicht fixierter beziehungsweise nicht berührter Abschnitt, insbesondere der Umfangswand, der Aerosoldose bearbeitet werden, insbesondere ein, insbesondere der, dem Bodenabschnitt, soweit vorhanden, gegenüberliegender offener Endabschnitt.

Die Spannvorrichtung kann als Aerosoldosenhalterung oder Spannzange bezeichnet werden. Zusätzlich oder alternativ kann die Spannvorrichtung nur eine einzige, insbesondere die, Spannhülse aufweisen. Weiter zusätzlich oder alternativ kann die Spannvorrichtung nur eine einzige, insbesondere die, Verformungseinrichtung aufweisen.

Die Spannhülse kann als Innenhülse bezeichnet werden. Insbesondere kann die Spannhülse eine ringförmige Spannhülse sein. Zusätzlich oder alternativ kann die Spannhülse beziehungsweise ihr Aufnahmeraum die Form eines mindestens einseitig, insbesondere beidseitig, offenen Zylinders aufweisen. Weiter zusätzlich oder alternativ kann die Spannhülse einteilig beziehungsweise einstückig ausgebildet sein. Weiter zusätzlich oder alternativ ermöglicht der Freigabezustand eine Einführung, insbesondere des Abschnitts der Umfangswand, der Aerosoldose in die Spannvorrichtung beziehungsweise ihre Spannhülse beziehungsweise ihren Aufnahmeraum hinein, insbesondere in einer axialen Richtung, und/oder eine Ausführung aus der Spannvorrichtung beziehungsweise ihrer Spannhülse beziehungsweise ihrem Aufnahmeraum heraus, insbesondere in einer, insbesondere der, axialen Richtung. Weiter zusätzlich oder alternativ kann der Spannzustand von dem Freigabezustand verschieden sein. Insbesondere braucht die Spannhülse in ihrem Freigabezustand die aufgenommene Aerosoldose nicht zu berühren. Weiter zusätzlich oder alternativ kann Berührung als unmittelbare Kontaktierung bezeichnet werden. Weiter zusätzlich oder alternativ ermöglicht im Spannzustand die Berührung die Beaufschlagung beziehungsweise die Beaufschlagung kann durch die Berührung erfolgen. Weiter zusätzlich oder alternativ ermöglicht die Beaufschlagung mit der nach innen gerichteten Spannkraft die Fixierung der Aerosoldose beziehungsweise die Fixierung kann durch die Beaufschlagung erfolgen. Insbesondere kann Haftreibung, insbesondere in einer, insbesondere der, axialen Richtung, zwischen der Spannhülse und dem Abschnitt der Umfangswand der aufgenommenen, insbesondere fixierten, Aerosoldose wirken. Somit kann die Spannvorrichtung beziehungsweise ihre Spannhülse eine Sicherung der Aerosoldose gegen unbeabsichtigtes Herausziehen aus der Spannvorrichtung ermöglichen. Weiter zusätzlich oder alternativ kann die Spannhülse eine, insbesondere während der Bearbeitung der Aerosoldose, eventuell, insbesondere in einer, insbesondere der, axialen Richtung, wirkende Zugbelastung durch die Aerosoldose aufnehmen. Weiter zusätzlich oder alternativ kann die Spannhülse komprimierbar, insbesondere radial, nach innen zur Veränderung von ihrem Freigabezustand in ihren Spannzustand ausgebildet sein. Insbesondere kann ein, insbesondere mittlerer, Aufnahmeraum-Innenabstand, insbesondere ein, insbesondere mittlerer, Aufnahmeraum-Innendurchmesser, des Aufnahmeraums beziehungsweise der Spannhülse, insbesondere in einer, insbesondere der, radialen Richtung, im Spannzustand geringer beziehungsweise kleiner als im Freigabezustand sein, insbesondere minimal 0,1 Millimeter (mm), insbesondere minimal 0,2 mm, insbesondere minimal 0,5 mm, und/oder maximal 10 mm, insbesondere maximal 5 mm, insbesondere maximal 2 mm, insbesondere 1 mm.

Die Spannhülse und/oder die elastische Verformungseinrichtung können/kann derart angeordnet sein, dass die Verformungseinrichtung die, insbesondere aufgenommene, Aerosoldose nicht berühren kann, insbesondere bei bestimmungsgemäßer Verwendung der Spannvorrichtung, insbesondere wobei die bestimmungsgemäße Verwendung der Spannvorrichtung die feste Fixierung der Aerosoldose während der Bearbeitung der Aerosoldose sein kann. Insbesondere braucht die Verformungseinrichtung eine, insbesondere während der Bearbeitung der Aerosoldose, eventuell, insbesondere in einer, insbesondere der, axialen Richtung, wirkende Zugbelastung durch die Aerosoldose nicht aufzunehmen. Zusätzlich oder alternativ kann die Verformungseinrichtung die Spannhülse berühren, insbesondere bei elastischer Verformung nach innen. Weiter zusätzlich oder alternativ kann die Verformungseinrichtung zum, insbesondere formschlüssigen, Zusammenwirken mit der Spannhülse ausgebildet sein. Insbesondere kann die Verformungseinrichtung zur Beaufschlagung, insbesondere eines, insbesondere axialen, Abschnitts der Außenseite beziehungsweise Umfangswand, der Spannhülse mit einer, insbesondere radial, nach innen gerichteten Veränderungskraft zur Veränderung der Spannhülse von ihrem Freigabezustand in ihren Spannzustand ausgebildet sein. Weiter zusätzlich oder alternativ braucht die Verformungseinrichtung keine stoffschlüssige Verbindung mit der Spannhülse aufzuweisen. Weiter zusätzlich oder alternativ können die Spannhülse und die Verformungseinrichtung in, insbesondere der, axialen Richtung überlappen. Weiter zusätzlich oder alternativ kann die Verformungseinrichtung eine ringförmige Verformungseinrichtung sein. Weiter zusätzlich oder alternativ kann die Verformungseinrichtung mindestens einseitig, insbesondere beidseitig, offen sein. Weiter zusätzlich oder alternativ kann die Verformungseinrichtung, insbesondere in Umfangsrichtung beziehungsweise umfangsseitig, geschlossen sein. Weiter zusätzlich oder alternativ kann die Verformungseinrichtung einteilig beziehungsweise einstückig ausgebildet sein. Weiter zusätzlich oder alternativ ermöglicht ein Wegfall der elastischen Verformung nach innen beziehungsweise eine Rückkehr der Verformungseinrichtung, insbesondere radial, nach außen eine Rückkehr der Spannhülse von ihrem Freigabezustand in ihren Spannzustand.

Die axiale Richtung kann orthogonal beziehungsweise senkrecht zu einer, insbesondere der, radialen Richtung und/oder einer, insbesondere der, Umfangsrichtung sein. Zusätzlich oder alternativ kann eine, insbesondere die, radiale Richtung orthogonal beziehungsweise waagrecht zu einer, insbesondere der, Umfangsrichtung sein.

Dies, insbesondere die Fluidbeaufschlagungseinrichtung, ermöglicht eine zeitlich relativ schnelle Verformung der Verformungseinrichtung und somit eine zeitlich relativ schnelle Veränderung der Spannhülse von ihrem Freigabezustand in ihren Spannzustand, und insbesondere zurück. Insbesondere kann eine Taktrate beziehungsweise Taktzahl der Spannvorrichtung - ein Einführungs- und Fixierungsschritt oder ein Freigabe- und Ausführungsschritt der Aerosoldose - minimal 100 Takte pro Minute sein, insbesondere minimal 120 Takte pro Minute, insbesondere minimal 150 Takte pro Minute, insbesondere minimal 200 Takte pro Minute. In anderen Worten: eine Zeitdauer eines Takts kann maximal 0,6 Sekunden (s; 600 ms) sein, insbesondere maximal 0,5 s, insbesondere maximal 0,4 s, insbesondere maximal 0,3 s. Zusätzlich oder alternativ kann das Fluid eine Flüssigkeit, insbesondere eine Hydraulikflüssigkeit, wie beispielsweise Öl, oder ein Gas sein, wie beispielsweise Druckluft.

Insbesondere kann Konifizierung eine Ausformung von einer Dosenschulter und einem Dosenhals beziehungsweise einem Sprühventilsitz bedeuten. Insbesondere kann die Konifikationsvorrichtung zur Konifizierung zur Berührung und zur plastischen Verformung der Aerosoldose, insbesondere radial, nach innen und/oder außen ausgebildet sein. Insbesondere kann die Konifikationsvorrichtung zur Beaufschlagung der Aerosoldose mit einer, insbesondere radial, nach innen und/oder außen gerichteten Verformungskraft zur plastischen Verformung der Aerosoldose ausgebildet sein. Zusätzlich oder alternativ kann die Konifikationsvorrichtung in einer, insbesondere der, axialen Richtung von der Spannvorrichtung beziehungsweise ihrer Spannhülse angeordnet sein, insbesondere von ihrem, insbesondere offenen, Ende beziehungsweise Einführende, soweit vorhanden. Weiter zusätzlich oder alternativ kann eine Taktrate beziehungsweise Taktzahl des Konifikationssystems - ein Konifizierungsschritt beziehungsweise eine Konifizierungsstufe der Aerosoldose - minimal 100 Takte pro Minute sein, insbesondere minimal 120 Takte pro Minute, insbesondere minimal 150 Takte pro Minute, insbesondere minimal 200 Takte pro Minute. Anders formuliert: eine Zeitdauer eines Takts kann maximal 0,6 Sekunden (s; 600 ms) sein, insbesondere maximal 0,5 s, insbesondere maximal 0,4 s, insbesondere maximal 0,3 s. Weiter zusätzlich oder alternativ kann die Konifikationsvorrichtung als Konifikationswerkzeug bezeichnet werden.

In einer Weiterbildung der Erfindung sind/ist eine Hülsen-Höhe der Spannhülse und/oder eine Aufnahmeraum-Höhe des Aufnahmeraums größer als eine Einrichtungs-Höhe der Verformungseinrichtung in einer, insbesondere der, axialen Richtung. Zusätzlich oder alternativ sind/ist eine, insbesondere die, Hülsen-Höhe der Spannhülse und/oder eine, insbesondere die, Aufnahmeraum-Höhe des Aufnahmeraums in einer, insbesondere der, axialen Richtung minimal 10 mm und/oder maximal 50 mm. Einerseits ermöglicht dies eine relativ großflächige Berührung und somit eine relativ großflächige Fixierung, insbesondere des Abschnitts der Umfangswand, der Aerosoldose. Andererseits ermöglicht dies eine Außenbearbeitung der Aerosoldose, insbesondere eines, insbesondere des, nicht fixierten beziehungsweise nicht berührten Abschnitts, insbesondere der Umfangswand, der Aerosoldose. Zusätzlich oder alternativ kann die Spannvorrichtung einen innenseitigen Spann-Aufnahmeraum zur Aufnahme eines, insbesondere des, Abschnitts der Umfangswand der Aerosoldose aufweisen, wobei eine Höhe des Spann-Aufnahmeraums in einer, insbesondere der, axialen Richtung minimal 10 mm und/oder maximal 60 mm, insbesondere maximal 50 mm, sein kann.

In einer Weiterbildung der Erfindung ist die Spannhülse an einem, insbesondere offenen, Ende beziehungsweise in einem, insbesondere offenen, Endbereich in einer, insbesondere der, axialen Richtung innenseitig, insbesondere radial, nach außen aufgeweitet zur Einführung des Abschnitts der Umfangswand der Aerosoldose in den Aufnahmeraum geformt. Dies ermöglicht eine zentrierte Einführung der Aerosoldose in die Spannhülse beziehungsweise ihren Aufnahmeraum und/oder, ein Risiko eines Verkantens bei der Einführung zu reduzieren oder sogar zu vermeiden. Insbesondere kann das Ende als Einführende oder Fase beziehungsweise der Endbereich kann als Einführbereich bezeichnet werden. Zusätzlich oder alternativ kann das Ende beziehungsweise der Endbereich sich in, insbesondere axialer, Richtung des Aufnahmeraums verjüngen beziehungsweise verengen. Insbesondere kann das Ende beziehungsweise der Endbereich konusförmig ausgebildet sein. Weiter zusätzlich oder alternativ kann eine Höhe der Aufweitung in der axialen Richtung minimal 1 mm, insbesondere minimal 2 mm, und/oder maximal 10 mm sein, insbesondere maximal 5 mm.

In einer Weiterbildung der Erfindung ist ein, insbesondere der, Aufnahmeraum-Innenabstand, insbesondere ein, insbesondere der, Aufnahmeraum-Innendurchmesser, des Aufnahmeraums beziehungsweise der Spannhülse, insbesondere in einer, insbesondere der, radialen Richtung, minimal 34 mm und/oder maximal 70 mm. Dies ermöglicht die Aufnahme der Aerosoldose mit einem Durchmesser von 35 mm, 38 mm. 45 mm, 50 mm, 53 mm, 59 mm oder 69 mm.

In einer Weiterbildung der Erfindung weist die Spannhülse eine kreisrunde Querschnittsform auf. Zusätzlich oder alternativ weist der Aufnahmeraum eine kreisrunde Querschnittsform auf. Weiter zusätzlich oder alternativ weist die Verformungseinrichtung eine kreisrunde Querschnittsform auf. Dies ermöglicht einen in Umfangsrichtung gleichmäßigen Wert der Spannkraft.

In einer Weiterbildung der Erfindung ist die Spannhülse, insbesondere in Umfangsrichtung beziehungsweise umfangsseitig, geschlossen beziehungsweise durchgehend beziehungsweise unterbrechungsfrei beziehungsweise ununterbrochen. Dies ermöglicht einen in Umfangsrichtung gleichmäßigen Wert der Spannkraft. Insbesondere kann in Umfangsrichtung geschlossen um 360 Grad (°) geschlossen bedeuten.

In einer Weiterbildung der Erfindung weist die Spannhülse in Umfangsrichtung beziehungsweise umfangsseitig eine Mehrzahl von Einschnitten auf. Jeder der Einschnitte verläuft beziehungsweise erstreckt sich von einem, insbesondere dem, Ende oder von einem, insbesondere dem, anderen beziehungsweise gegenüberliegenden Ende der Spannhülse mit einer Einschnitt-Länge in einer, insbesondere der, axialen Richtung von über 50 %, insbesondere von minimal 60 %, insbesondere von minimal 70 %, und/oder von maximal 95 %, insbesondere von maximal 90 %, einer, insbesondere der, Hülsen-Höhe der Spannhülse. In anderen Worten: die Einschnitte können in der axialen Richtung überlappen. Dies ermöglicht die Veränderung der Spannhülse von ihrem Freigabezustand in ihren Spannzustand, insbesondere eine Verringerung beziehungsweise Verkleinerung des Aufnahmeraum-Innenabstands, insbesondere des Aufnahmeraum-Innendurchmessers, soweit vorhanden. Insbesondere können die Einschnitte sich aufgrund der Verformung der Verformungseinrichtung verengen, insbesondere in Umfangsrichtung. Zusätzlich oder alternativ braucht oder darf keiner der Einschnitte von dem einen Ende zu dem anderen Ende, insbesondere durchgehend, verlaufen. Anders formuliert: die, insbesondere jeweilige, Einschnitt-Länge, insbesondere in der axialen Richtung, braucht nicht der Hülsen-Höhe zu entsprechen beziehungsweise zu gleichen. Weiter zusätzlich oder alternativ kann mindestens einer der Einschnitte von dem einen Ende verlaufen und mindestens ein anderer der Einschnitte kann von dem anderen Ende verlaufen. Weiter zusätzlich oder alternativ kann einer, insbesondere jeder, der Einschnitte nur in der axialen Richtung oder zusätzlich in Umfangsrichtung beziehungsweise einem zu der axialen Richtung abweichenden Winkel verlaufen. Weiter zusätzlich oder alternativ kann ein geschlossenes Einschnittende eines, insbesondere jedes, der Einschnitte kreisförmig ausgebildet sein. Dies kann ermöglichen, ein Risiko einer unerwünschten Rissbildung und somit einer dadurch bedingten Beschädigung der Spannhülse zu reduzieren oder sogar zu vermeiden. Weiter zusätzlich oder alternativ kann die Mehrzahl der Einschnitte mindestens acht sein, insbesondere mindestens zwölf. Weiter zusätzlich oder alternativ können die Einschnitte als Schlitze bezeichnet werden.

In einer Ausgestaltung der Erfindung verlaufen die Einschnitte abwechselnd beziehungsweise alternierend von dem einen Ende und dem anderen Ende der Spannhülse verlaufen. Dies ermöglicht einen in Umfangsrichtung gleichmäßigen Wert der Spannkraft, insbesondere eine gleichmäßige Veränderung der Spannhülse, insbesondere eine gleichmäßige Verringerung des Aufnahmeraum-Innenabstands, insbesondere des Aufnahmeraum-Innendurchmessers, soweit vorhanden.

In einer Ausgestaltung der Erfindung sind die Einschnitte in Umfangsrichtung gleichmäßig verteilt angeordnet. Dies ermöglicht einen in Umfangsrichtung gleichmäßigen Wert der Spannkraft, insbesondere eine gleichmäßige Veränderung der Spannhülse, insbesondere eine gleichmäßige Verringerung des Aufnahmeraum-Innenabstands, insbesondere des Aufnahmeraum-Innendurchmessers, soweit vorhanden. Insbesondere kann gleichmäßig verteilt in konstanten Abständen, insbesondere Winkelabständen, bedeuten, beispielsweise 30 °.

In einer Weiterbildung der Erfindung ist im Bereich des Aufnahmeraums eine, insbesondere mittlere, Hülsen-Wandstärke der Spannhülse, insbesondere in einer, insbesondere der, radialen Richtung, minimal 2 mm, insbesondere minimal 3 mm, und/oder maximal 8 mm, insbesondere maximal 6 mm, insbesondere maximal 5 mm, insbesondere 4 mm. Insbesondere kann im Bereich auf gleicher Höhe in einer, insbesondere der, axialen Richtung bedeuten. Zusätzlich oder alternativ kann die Hülsen-Wandstärke als Hülsen-Dicke bezeichnet werden.

In einer Weiterbildung der Erfindung besteht die Spannhülse teilweise oder vollständig aus einem Kunststoff, insbesondere Polyetherketon (PEK) und/oder Polyoxymethylen (POM). Dies ermöglicht eine Elastizität und/oder eine relativ hohe Verschleißfestigkeit uns somit eine relativ lange Lebensdauer der Spannhülse und/oder eine relativ hohe Haftreibung. Zusätzlich oder alternativ besteht die Verformungseinrichtung teilweise oder vollständig aus einem Elastomer, insbesondere Gummi. Dies ermöglicht eine Elastizität der Verformungseinrichtung.

In einer Weiterbildung der Erfindung weist die Verformungseinrichtung eine, insbesondere nur eine einzige und/oder die, elastische Membran auf oder ist eine, insbesondere die, elastische Membran. Die Membran umfasst beziehungsweise umgibt die Spannhülse umfangsseitig beziehungsweise in Umfangsrichtung, insbesondere von außen beziehungsweise an einer, insbesondere der, Außenseite beziehungsweise einer, insbesondere der, Umfangswand der Spannhülse. Des Weiteren ist die Membran zur elastischen Wölbung beziehungsweise Krümmung, insbesondere radial, nach innen, insbesondere mit mindestens einem Teil, zur Veränderung der Spannhülse von ihrem Freigabezustand in ihren Spannzustand ausgebildet. Insbesondere kann die Membran zur Ausbildung eines, insbesondere radial, nach innen gerichteten Wulstes ausgebildet sein.

Insbesondere kann die Spannvorrichtung eine, insbesondere mechanische, Aktuierungseinrichtung aufweisen. Die Aktuierungseinrichtung kann zur Beaufschlagung der Verformungseinrichtung, insbesondere der Membran, soweit vorhanden, mit einer Kraft, insbesondere in einer, insbesondere der, axialen Richtung, zur Verformung der Verformungseinrichtung nach innen ausgebildet sein.

Außerdem bezieht sich die Erfindung auf eine, insbesondere erfindungsgemäße und/oder die, Verwendung der Spannvorrichtung des Konifikationssystems zur festen Fixierung der Aerosoldose während der Konifizierung der Aerosoldose.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Perspektivansicht eines erfindungsgemäßen Konifikationssystems aufweisend eine Spannvorrichtung mit einer zu fixierenden Aerosoldose und eine Konifikationsvorrichtung und eine erfindungsgemäße Verwendung der Spannvorrichtung des Konifikationssystems,
- Fig. 2: eine Axialschnittansicht des Konifikationssystems aufweisend die Spannvorrichtung mit der zu fixierenden Aerosoldose und die Konifikationsvorrichtung der Fig. 1 und die Verwendung der Spannvorrichtung,
- Fig. 3: eine Vergrößerung eines Ausschnitts der Fig. 2,
- Fig. 4: eine weitere Vergrößerung eines Ausschnitts der Fig. 2 mit der Spannvorrichtung und ohne die Aerosoldose und ohne die Konifikationsvorrichtung, und
- Fig. 5: eine axialgeschnittene Perspektivansicht der Spannvorrichtung der Fig. 1.

### DETAILLIERTE BESCHREIBUNG DER AUSFÜHRUNGSBEISPIELE

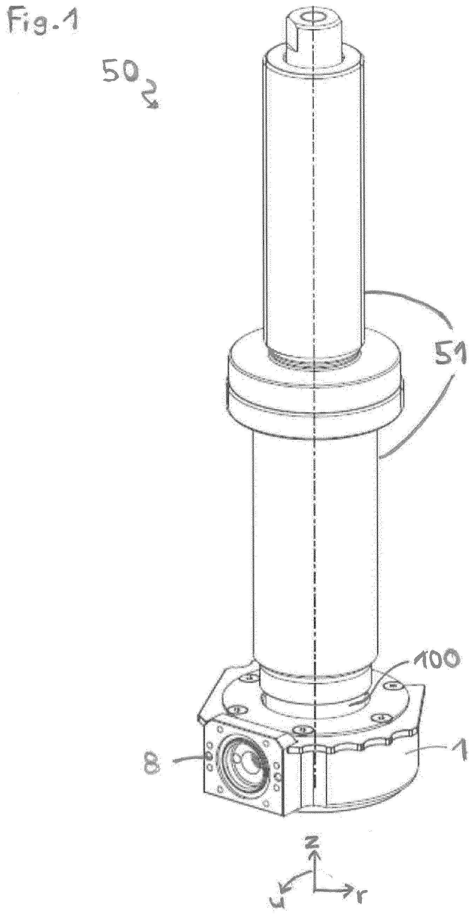

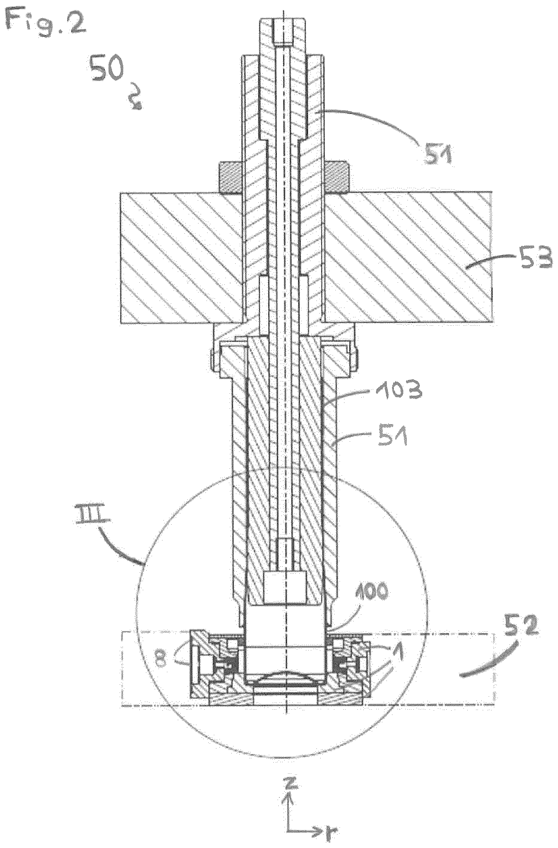

Fig. 1 bis 5 zeigen ein erfindungsgemäßes Konifikationssystem 50. Das Konifikationssystem 50 weist, insbesondere mindestens, eine Spannvorrichtung 1 zur festen Fixierung einer Aerosoldose 100 auf. Des Weiteren weist das Konifikationssystem 50, insbesondere mindestens, eine Konifikationsvorrichtung 51 auf. Die Konifikationsvorrichtung 51 ist zur Konifizierung der fixierten Aerosoldose 100 ausgebildet.

In Fig. 1 bis 3 ist die Aerosoldose 100 mittels der Spannvorrichtung 1 zu fixieren. In anderen Worten: Fig. 1 bis 3 zeigen eine erfindungsgemäße Verwendung der Spannvorrichtung 1 des Konifikationssystems 50 zur festen Fixierung der Aerosoldose 100 während der Konifizierung der Aerosoldose 100.

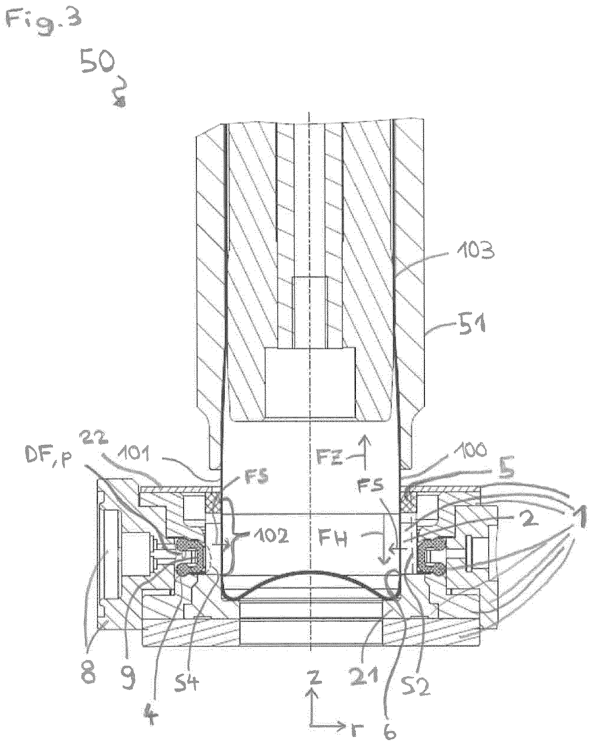

Die Spannvorrichtung 1 zur festen Fixierung der Aerosoldose 100 während der Konifizierung der Aerosoldose weist eine, insbesondere elastische, Spannhülse 2 und eine elastische Verformungseinrichtung 4 auf, wie in Fig. 3 bis 5 gezeigt. Die Spannhülse 2 weist einen innenseitigen Aufnahmeraum 3 zur Aufnahme eines, insbesondere axialen, Abschnitts 102 einer Umfangswand 101 der Aerosoldose 100 auf. Des Weiteren ist die Spannhülse 2 zur, insbesondere elastischen, Veränderung zwischen einem Freigabezustand zur Freigabe der aufgenommenen Aerosoldose 100 und einem Spannzustand zur Berührung und zur Beaufschlagung des Abschnitts 102 der Umfangswand 101 der aufgenommenen Aerosoldose 100 mit einer, insbesondere radial, nach innen, insbesondere in einer radialen Richtung r, gerichteten Spannkraft FS ausgebildet. Die Verformungseinrichtung 4 umfasst die Spannhülse 2 umfangsseitig. Außerdem ist die Verformungseinrichtung 4 zur elastischen Verformung, insbesondere radial, nach innen, insbesondere mit mindestens einem Teil, zur Veränderung der Spannhülse 2 von ihrem Freigabezustand in ihren Spannzustand ausgebildet.

In Fig. 3 bis 5 ist die Verformungseinrichtung 4 nicht verformt und die Spannhülse 2 ist in ihrem Freigabezustand. Zusätzlich ist in Fig. 3 mittels Strichlinien S4 die Verformung der Verformungseinrichtung 4 angezeigt und mittels Strichlinien S2 ist die Veränderung beziehungsweise der Spannzustand der Spannhülse 2 angezeigt.

Im Detail ist die Spannhülse 2 ringförmig ausgebildet. Im gezeigten Ausführungsbeispiel ist die Spannhülse 2, insbesondere in Umfangsrichtung u, geschlossen. Des Weiteren weist im gezeigten Ausführungsbeispiel die Spannhülse 2 beziehungsweise ihr Aufnahmeraum 3 die Form eines beidseitig offenen Kreiszylinders auf.

Die Verformungseinrichtung 4 ist ringförmig ausgebildet. Im gezeigten Ausführungsbeispiel ist die Verformungseinrichtung 4, insbesondere in Umfangsrichtung u, geschlossen. Des Weiteren weist im gezeigten Ausführungsbeispiel die Verformungseinrichtung 4 eine kreisrunde Querschnittsform auf.

Im Detail ist die Verformungseinrichtung 4 eine elastische Membran. Die Membran 4 umfasst die Spannhülse 2 umfangsseitig. Außerdem ist die Membran 4 zur elastischen Wölbung, insbesondere radial, nach innen, insbesondere mit mindestens einem Teil, zur Veränderung der Spannhülse 2 von ihrem Freigabezustand in ihren Spannzustand ausgebildet.

Im gezeigten Ausführungsbeispiel berührt die Verformungseinrichtung beziehungsweise die Membran 4 die Spannhülse 2, insbesondere radial, von außen beziehungsweise an einer, insbesondere in der radial Richtung r nach außen gerichteten, Umfangswand der Spannhülse 2.

Weiter besteht die Verformungseinrichtung in Form der Membran 4 teilweise oder vollständig aus einem Elastomer, insbesondere Gummi. Die Spannhülse 2 besteht teilweise oder vollständig aus einem Kunststoff, insbesondere PEK und/oder POM.

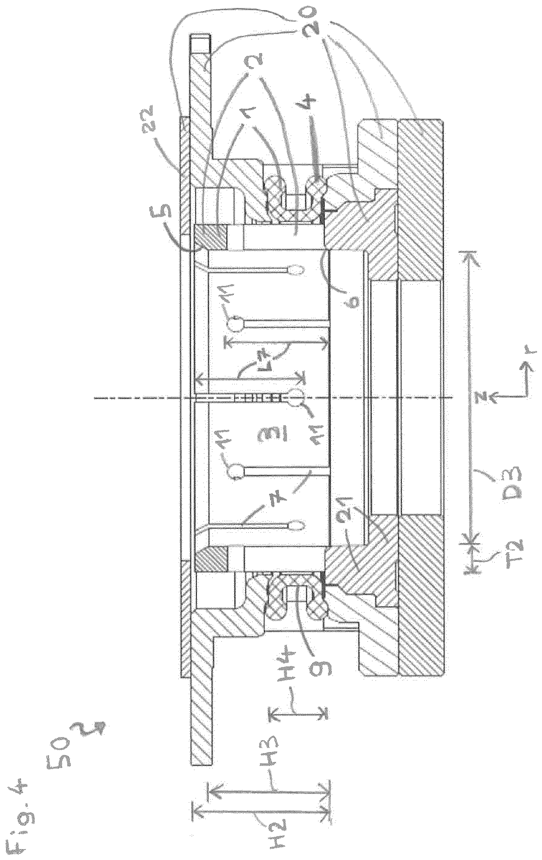

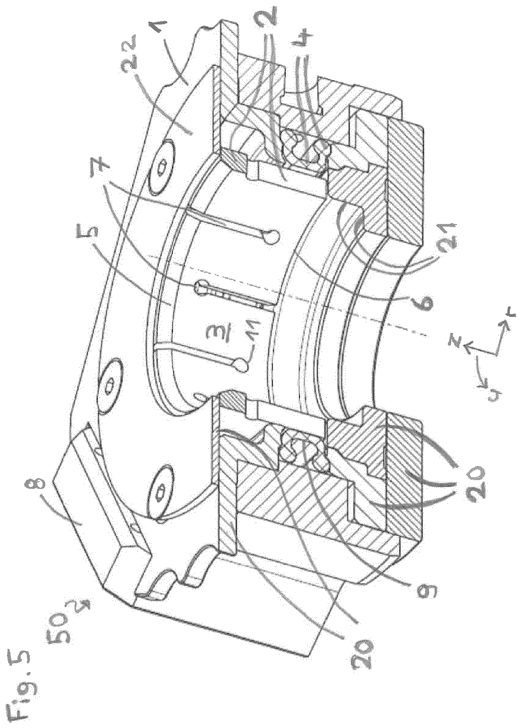

Im Detail weist die Spannhülse 2 in Umfangsrichtung u eine Mehrzahl von Einschnitten 7 auf. Jeder der Einschnitte 7 verläuft von einem Ende beziehungsweise Öffnungsende 5, in Fig. 4 und 5 von oben nach unten, oder von einem anderen beziehungsweise gegenüberliegenden Ende beziehungsweise Öffnungsende 6, in Fig. 4 und 5 von unten nach oben, der Spannhülse 2 mit einer Einschnitt-Länge L7 in der axialen Richtung z von über 50 %, insbesondere von minimal 60 % und/oder von maximal 95 %, einer Hülsen-Höhe H2 der Spannhülse 2.

Im gezeigten Ausführungsbeispiel ist ein geschlossenes Einschnittende 11 jedes der Einschnitte 7 kreisförmig ausgebildet.

Zudem ist im gezeigten Ausführungsbeispiel die Mehrzahl der Einschnitte 7 zwölf. In alternativen Ausführungsbeispielen kann die Mehrzahl der Einschnitte anders sein, insbesondere mindestens acht.

Im Detail verlaufen die Einschnitte 7 abwechselnd von dem einen Ende 5 und dem anderen Ende 6 der Spannhülse 2.

Des Weiteren sind die Einschnitte 7 in Umfangsrichtung u gleichmäßig verteilt angeordnet, im gezeigten Ausführungsbeispiel alle 30 °.

Im gezeigten Ausführungsbeispiel ist im Bereich des Aufnahmeraums 3 eine Hülsen-Wandstärke T2 der Spannhülse 2, insbesondere in der radialen Richtung r, 4 mm. In alternativen Ausführungsbeispielen kann die Hülsen-Wandstärke minimal 2 mm und/oder maximal 8 mm sein.

Außerdem ist im gezeigten Ausführungsbeispielen ein Aufnahmeraum-Innenabstand D3, insbesondere ein Aufnahmeraum-Innendurchmesser, des Aufnahmeraums 3 beziehungsweise der Spannhülse 2, insbesondere in der radialen Richtung r, 50 mm. In alternativen Ausführungsbeispielen kann der Aufnahmeraum-Innenabstand minimal 34 mm und/oder maximal 70 mm sein. Zusätzlich oder alternativ kann in alternativen Ausführungsbeispielen die Hülsen-Wandstärke, insbesondere ihr Wert, von dem Aufnahmeraum-Innenabstand, insbesondere seinem Wert, und/oder einem Verformungseinrichtung-Innenabstand, insbesondere einem Verformungseinrichtung-Innendurchmesser, der Verformungseinrichtung abhängen, insbesondere seinem Wert.

Im Detail ist der Aufnahmeraum-Innenabstand beziehungsweise der Aufnahmeraum-Innendurchmesser D3 im Freigabezustand der Spannhülse 2 50,5 mm und im Spannzustand der Spannhülse 2, insbesondere ohne die Aerosoldose 100, 49,5 mm und/oder 50 mm, insbesondere mit der Aerosoldose 100.

Weiter ist die Spannhülse 2 an dem Ende beziehungsweise Öffnungsende 5 in der axialen Richtung z, in Fig. 3 bis 5 von unten nach oben, innenseitig, insbesondere radial, nach außen aufgeweitet zur Einführung des Abschnitts 102 der Umfangswand 101 der Aerosoldose 100 in den Aufnahmeraum 3 geformt, insbesondere konusförmig. Anders formuliert: das, in Fig. 3 bis 5 obere, Ende 5 der Spannhülse 2 weist einen im Vergleich zum, in Fig. 3 bis 5 unteren, Ende 6 der Spannhülse 2 größeren Innenabstand beziehungsweise Innendurchmesser auf. Im Bereich des Endes 5 verjüngt eine Innenseite beziehungsweise Innenoberfläche der Spannhülse 2 sich mit zunehmen Abstand von dem Ende beziehungsweise der Mündungsöffnung 5, in Fig. 3 bis 5 von oben nach unten.

Zudem sind die Hülsen-Höhe H2 der Spannhülse 2 und eine Aufnahmeraum-Höhe H3 des Aufnahmeraums 3 größer als eine Einrichtungs-Höhe H4 der Verformungseinrichtung 4 in der axialen Richtung z.

Des Weiteren sind die Hülsen-Höhe H2 der Spannhülse 2 und die Aufnahmeraum-Höhe H3 des Aufnahmeraums 3 in der axialen Richtung z minimal 10 mm und/oder maximal 50 mm.

Außerdem weist die Spannvorrichtung 1 eine, insbesondere hydraulische, Fluidbeaufschlagungseinrichtung 8 auf. Die Fluidbeaufschlagungseinrichtung 8 ist zur Beaufschlagung einer Außenseite 9 der Verformungseinrichtung beziehungsweise der Membran 4 mit einem Fluid DF, insbesondere Hydrauliköl, mit einem Druck p zur Verformung der Verformungseinrichtung 4, insbesondere radial, nach innen ausgebildet.

Weiter weist im gezeigten Ausführungsbeispiel die Spannvorrichtung 1 einen Grundkörper 20 auf. Die Spannhülse 2 ist in dem Grundkörper 20 angeordnet. Des Weiteren sichert der Grundkörper 20 die Spannhülse 2 gegen Bewegung in der axialen Richtung z. Im Detail weist der Grundkörper 20 eine aufgeschraubte Platte 22 auf, wobei die Platte 22 die Spannhülse 2 gegen Bewegung in der axialen Richtung z sichert. Außerdem ist die Verformungseinrichtung 4 in dem Grundkörper 20 angeordnet. Im Detail ist die Membran 4 in dem Grundkörper 20 eingespannt, insbesondere randeingespannt. Weiter sichert der Grundkörper 20 die Verformungseinrichtung 4 gegen Bewegung in der axialen Richtung z. Zusätzlich sichert der Grundkörper 20 die Verformungseinrichtung 4 und somit die Spannhülse 2 gegen Verlieren in der radialen Richtung r. Zudem ist die Fluidbeaufschlagungseinrichtung 8 teilweise in dem Grundkörper 20 angeordnet. In alternativen Ausführungsbeispielen kann es ausreichen, wenn entweder die Spannhülse oder die Verformungseinrichtung oder die Fluidbeaufschlagungseinrichtung in dem Grundkörper angeordnet sein kann. Zusätzlich oder alternativ kann es in alternativen Ausführungsbeispielen ausreichen, wenn der Grundkörper entweder die Spannhülse oder die Verformungseinrichtung gegen Bewegung in der axialen Richtung und/oder in der radialen Richtung sichern kann. Des Weiteren weist im gezeigten Ausführungsbeispiel der Grundkörper 20 ein ringförmiges Begrenzungselement 21 auf, in Fig. 3 bis 5 unten. Das ringförmige Begrenzungselement 21 ermöglicht ein Eindrücken eines, insbesondere geschlossenen, Bodens der Aerosoldose 100, insbesondere in der axialen Richtung z, in Fig. 3 bis 5 von unten nach oben, und/oder insbesondere durch eine pilzförmige Gegenform. Insbesondere kann die pilzförmige Gegenform durch das Begrenzungselement 21 hindurch eindrücken und/oder in der Spannvorrichtung 1 sitzen. Das Begrenzungselement 21 ist zur Begrenzung, insbesondere zur Vermeidung, einer Verformung, insbesondere einer Ausbeulung oder Stauchung, der Aerosoldose 100, insbesondere radial, nach außen und/oder in der axialen Richtung z, in Fig. 3 bis 5 nach unten, ausgebildet, insbesondere während oder aufgrund des Eindrückens des Bodens der Aerosoldose 100. Im Detail ist das Begrenzungselement 21 ein Stahlring. In alternativen Ausführungsbeispielen braucht der Grundkörper das Begrenzungselement nicht aufzuweisen. Im gezeigten Ausführungsbeispiel ist das Begrenzungselement 21 in der axialen Richtung z von der Spannhülse 2 beziehungsweise ihrem, insbesondere offenen, Ende 6 angeordnet, in Fig. 3 bis 5 unterhalb der Spannhülse 2 beziehungsweise ihrem Ende 6.

Vor der Konifizierung weist die Aerosoldose 100 die Form eines einseitig offenen Kreiszylinders auf, im gezeigten Ausführungsbeispiel mit einem Durchmesser von 50 mm.

Zur Aufnahme beziehungsweise zur Einführung, insbesondere des Abschnitts 102 der Umfangswand 101, der Aerosoldose 100 in die Spannvorrichtung 1 beziehungsweise ihre Spannhülse 2 beziehungsweise ihren Aufnahmeraum 3 hinein, insbesondere in der axialen Richtung z, beaufschlagt die Fluidbeaufschlagungseinrichtung 8 die Außenseite 9 der Verformungseinrichtung beziehungsweise der Membran 4 nicht mit dem Fluid DF mit dem Druck p. Somit ist die Verformungseinrichtung beziehungsweise die Membran 4 nicht, insbesondere radial, nach innen verformt. Somit ist die Spannhülse 2 in ihrem Freigabezustand und nicht in ihren Spannzustand verändert, im gezeigten Ausführungsbeispiel mit dem Aufnahmeraum-Innenabstand beziehungsweise dem Aufnahmeraum-Innendurchmesser D3 von 50,5 mm.

Im gezeigten Ausführungsbeispiel ist die Aerosoldose 100 mit dem, insbesondere geschlossenen, Boden voran an dem Ende 5 in die Spannvorrichtung 1 beziehungsweise ihre Spannhülse 2 hinein in der axialen Richtung z, in Fig. 1 bis 3 von oben nach unten, eingeführt, insbesondere bis zum Begrenzungselement 21. Der Abschnitt 102 der Umfangswand 101 der Aerosoldose 100 ist in dem Aufnahmeraum 3 aufgenommen.

Zur festen Fixierung, insbesondere des Abschnitts 102 der Umfangswand 101, der Aerosoldose 100 beaufschlagt die Fluidbeaufschlagungseinrichtung 8 die Außenseite 9 der Verformungseinrichtung beziehungsweise der Membran 4 mit dem Fluid DF mit dem Druck p. Somit verformt die Verformungseinrichtung 4 sich beziehungsweise die Membran 4 wölbt sich, insbesondere radial, nach innen. Im Detail bildet die Membran 4 einen, insbesondere radial, nach innen gerichteten Wulst. Somit verändert die Verformungseinrichtung beziehungsweise die Membran 4 die Spannhülse 2 von ihrem Freigabezustand in ihren Spannzustand, im gezeigten Ausführungsbeispiel mit dem verringerten Aufnahmeraum-Innenabstand beziehungsweise Aufnahmeraum-Innendurchmesser D3, insbesondere von 50 mm, insbesondere mit der Aerosoldose 100. Im Detail beaufschlagt die Verformungseinrichtung beziehungsweise die Membran 4 beziehungsweise ihr Wulst die Spannhülse 2, insbesondere ihre Umfangwand, mit einer, insbesondere radial, nach innen gerichteten Veränderungskraft FS. Somit verengen die Einschnitte 7 sich, insbesondere in Umfangsrichtung u. Somit ist die Spannhülse 2 komprimiert.

Somit berührt und beaufschlagt die Spannhülse 2 den Abschnitt 102 der Umfangswand 101 der aufgenommenen Aerosoldose 100 mit der, insbesondere radial, nach innen gerichteten Spannkraft FS, insbesondere in Umfangsrichtung u gleichmäßig. In anderen Worten: die Spannhülse 2 ist an den Abschnitt 102 der Umfangswand 101 der aufgenommenen Aerosoldose 100 gedrückt. Somit ist die Aerosoldose 100 fixiert.

Zur Freigabe beziehungsweise zur Ausführung der Aerosoldose 100 aus der Spannvorrichtung 1 beziehungsweise ihrer Spannhülse 2 beziehungsweise ihrem Aufnahmeraum 3 heraus, insbesondere in der axialen Richtung z, in Fig. 1 bis 3 von unten nach oben, beaufschlagt die Fluidbeaufschlagungseinrichtung 8 die Außenseite 9 der Verformungseinrichtung beziehungsweise der Membran 4 nicht, insbesondere nicht mehr, mit dem Fluid DF mit dem Druck p. Anders formuliert: die Verformungseinrichtung beziehungsweise die Membran 4 wird entlastet. Somit verformt die Verformungseinrichtung 4 sich beziehungsweise die Membran 4 wölbt sich, insbesondere radial, nach außen zurück, insbesondere aufgrund ihrer elastischen Eigenschaft, beziehungsweise ist nicht, insbesondere radial, nach innen verformt beziehungsweise gewölbt. Somit verändert sich beziehungsweise kehrt die Spannhülse 2 von ihrem Spannzustand in ihren Freigabezustand zurück, insbesondere aufgrund ihrer elastischen Eigenschaft. Somit ist die Spannhülse 2 in ihrem Freigabezustand und nicht, insbesondere nicht mehr, in ihren Spannzustand verändert, im gezeigten Ausführungsbeispiel mit dem Aufnahmeraum-Innenabstand beziehungsweise dem Aufnahmeraum-Innendurchmesser D3 von 50,5 mm. Somit ist die Aerosoldose 100 nicht, insbesondere nicht mehr, fixiert. Somit kann die Aerosoldose 100 ausgeführt werden.

Im Detail ist die Konifikationsvorrichtung 51 zur Konifizierung eines, insbesondere nicht fixierten, Abschnitts 103, insbesondere dem Boden gegenüberliegenden offenen Endabschnitts, der Umfangswand 101 der fixierten Aerosoldose 100 ausgebildet.

Im gezeigten Ausführungsbeispiel ist die Konifikationsvorrichtung 51 in der axialen Richtung z von der Spannvorrichtung 1 beziehungsweise ihrer Spannhülse 2 beziehungsweise ihrem, insbesondere offenen, Ende 5 angeordnet, in Fig. 1 bis 3 oberhalb der Spannvorrichtung 1 beziehungsweise ihrer Spannhülse 2 beziehungsweise ihrem Ende 5.

Im Detail weist das Konifikationssystem 50 einen Spannkranz 52 und einen Konifikationskranz 53 auf. Insbesondere kann der Konifikationskranz als Werkzeugkranz bezeichnet werden. Die Spannvorrichtung 1 beziehungsweise ihr Grundkörper 20 ist in dem Spannkranz 52 angeordnet. Die Konifikationsvorrichtung 51 ist in dem Konifikationskranz 53 angeordnet.

In Fig. 1 bis 3 ist ein erster Konifizierungsschritt beziehungsweise eine erste Konifizierungsstufe gezeigt. Darüber hinaus kann das Konifikationssystem eine Mehrzahl von, insbesondere den, Konifikationsvorrichtungen für eine Mehrzahl von Konifizierungsschritten beziehungsweise von Konifizierungsstufen aufweisen. Insbesondere kann das Konifikationssystem eine Mehrzahl von, insbesondere den, Spannvorrichtungen aufweisen. Insbesondere kann die Mehrzahl von Spannvorrichtungen in dem Spannkranz angeordnet sein, insbesondere kreisrund. Die Mehrzahl von Konifikationsvorrichtungen kann in dem Konifikationskranz angeordnet sein, insbesondere kreisrund. Der Spannkranz und der Konifikationskranz können zueinander rotieren und/oder sich bewegen, insbesondere in der axialen Richtung. Somit kann die Aerosoldose nach und nach konifiziert werden, insbesondere mit einer Taktrate von minimal 100 Takten pro Minute.

Im Detail kann Haftreibung FH, insbesondere in der axialen Richtung z, in Fig. 1 bis 3 von oben nach unten, zwischen der Spannhülse 2 und dem, insbesondere fixierten, Abschnitt 102 der Umfangswand 101 der aufgenommenen, insbesondere fixierten, Aerosoldose 100 wirken. Somit ermöglicht die Spannvorrichtung 1 beziehungsweise ihre Spannhülse 2 eine Sicherung der Aerosoldose 100 gegen unbeabsichtigtes Herausziehen aus der Spannvorrichtung 1. Insbesondere kann die Spannhülse 2 eine, insbesondere während der Konifizierung der Aerosoldose 100, eventuell, insbesondere in der axialen Richtung z, in Fig. 1 bis 3 von unten nach oben, wirkende Zugbelastung FZ durch die Aerosoldose 100 aufnehmen. Die Zugbelastung FZ wirkt, wenn überhaupt, nur indirekt beziehungsweise mittelbar über die Spannhülse 2 auf die Verformungseinrichtung beziehungsweise die Membran 4.

Wie die gezeigten und oben erläuterten Ausführungsformen deutlich machen, stellt die Erfindung ein Konifikationssystem mit einer Spannvorrichtung zur festen Fixierung einer Aerosoldose während einer Konifizierung der Aerosoldose bereit, wobei die Spannvorrichtung eine schonende, insbesondere beschädigungsfreie, Fixierung der Aerosoldose und/oder eine relativ lange Lebensdauer der Spannvorrichtung ermöglicht. Des Weiteren stellt die Erfindung eine Verwendung einer solchen Spannvorrichtung eines solchen Konifikationssystems zur festen Fixierung einer Aerosoldose während einer Konifizierung der Aerosoldose bereit.

## Patentansprüche

1. Konifikationssystem (50), wobei das Konifikationssystem (50) aufweist:
- eine Spannvorrichtung (1) zur festen Fixierung einer Aerosoldose (100) während einer Konifizierung der Aerosoldose (100), wobei die Spannvorrichtung (1) aufweist:
- eine Spannhülse (2), wobei die Spannhülse (2) einen innenseitigen Aufnahmeraum (3) zur Aufnahme eines Abschnitts (102) einer Umfangswand (101) der Aerosoldose (100) aufweist und zur Veränderung zwischen einem Freigabezustand zur Freigabe der aufgenommenen Aerosoldose (100) und einem Spannzustand zur Berührung und zur Beaufschlagung des Abschnitts (102) der Umfangswand (101) der aufgenommenen Aerosoldose (100) mit einer nach innen gerichteten Spannkraft (FS) ausgebildet ist,
- eine elastische Verformungseinrichtung (4), wobei die Verformungseinrichtung (4) die Spannhülse (2) umfangsseitig umfasst und zur elastischen Verformung nach innen zur Veränderung der Spannhülse (2) von ihrem Freigabezustand in ihren Spannzustand ausgebildet ist, und
- eine Fluidbeaufschlagungseinrichtung (8), wobei die Fluidbeaufschlagungseinrichtung zur Beaufschlagung einer Außenseite (9) der Verformungseinrichtung (4) mit einem Fluid (DF) mit einem Druck (p) zur Verformung der Verformungseinrichtung (4) nach innen ausgebildet ist, und
- eine Konifikationsvorrichtung (51), wobei die Konifikationsvorrichtung (51) zur Konifizierung der fixierten Aerosoldose (100) ausgebildet ist.

2. Konifikationssystem (50) nach Anspruch 1,
- wobei eine Hülsen-Höhe (H2) der Spannhülse (2) und/oder eine Aufnahmeraum-Höhe (H3) des Aufnahmeraums (3) größer als eine Einrichtungs-Höhe (H4) der Verformungseinrichtung (4) in einer axialen Richtung (z) sind/ist, und/oder
- wobei eine Hülsen-Höhe (H2) der Spannhülse (2) und/oder eine Aufnahmeraum-Höhe (H3) des Aufnahmeraums (3) in einer axialen Richtung (z) minimal 10 mm und/oder maximal 50 mm sind/ist.

3. Konifikationssystem (50) nach einem der vorhergehenden Ansprüche,
- wobei die Spannhülse (2) an einem Ende (5) in einer axialen Richtung (z) innenseitig nach außen aufgeweitet zur Einführung des Abschnitts (102) der Umfangswand (101) der Aerosoldose (100) in den Aufnahmeraum (3) geformt ist.

4. Konifikationssystem (50) nach einem der vorhergehenden Ansprüche,
- wobei ein Aufnahmeraum-Innenabstand (D3) des Aufnahmeraums (3) minimal 34 mm und/oder maximal 70 mm ist.

5. Konifikationssystem (50) nach einem der vorhergehenden Ansprüche,
- wobei die Spannhülse (2) eine kreisrunde Querschnittsform aufweist, und/oder
- wobei der Aufnahmeraum (3) eine kreisrunde Querschnittsform aufweist, und/oder
- wobei die Verformungseinrichtung (4) eine kreisrunde Querschnittsform aufweist.

6. Konifikationssystem (50) nach einem der vorhergehenden Ansprüche,
- wobei die Spannhülse (2) geschlossen ist.

7. Konifikationssystem (50) nach einem der vorhergehenden Ansprüche,
- wobei die Spannhülse (2) in Umfangsrichtung (u) eine Mehrzahl von Einschnitten (7) aufweist, wobei jeder der Einschnitte (7) von einem Ende (5) oder von einem anderen Ende (6) der Spannhülse (2) mit einer Einschnitt-Länge (L7) in einer axialen Richtung (z) von über 50 % einer Hülsen-Höhe (H2) der Spannhülse (2) verläuft.

8. Konifikationssystem (50) nach Anspruch 7,
- wobei die Einschnitte (7) abwechselnd von dem einen Ende (5) und dem anderen Ende (6) der Spannhülse (2) verlaufen.

9. Konifikationssystem (50) nach Anspruch 7 oder 8,
- wobei die Einschnitte (7) in Umfangsrichtung (u) gleichmäßig verteilt angeordnet sind.

10. Konifikationssystem (50) nach einem der vorhergehenden Ansprüche,
- wobei im Bereich des Aufnahmeraums (3) eine Hülsen-Wandstärke (T2) der Spannhülse (2) minimal 2 mm und/oder maximal 8 mm ist.

11. Konifikationssystem (50) nach einem der vorhergehenden Ansprüche,
- wobei die Spannhülse (2) teilweise oder vollständig aus einem Kunststoff, insbesondere Polyetherketon und/oder Polyoxymethylen, besteht, und/oder
- wobei die Verformungseinrichtung (4) teilweise oder vollständig aus einem Elastomer, insbesondere Gummi, besteht.

12. Konifikationssystem (50) nach einem der vorhergehenden Ansprüche,
- wobei die Verformungseinrichtung (4) eine elastische Membran aufweist oder ist, wobei die Membran (4) die Spannhülse (2) umfangsseitig umfasst und zur elastischen Wölbung nach innen zur Veränderung der Spannhülse (2) von ihrem Freigabezustand in ihren Spannzustand ausgebildet ist.

13. Verwendung einer Spannvorrichtung (1) eines Konifikationssystems (50) nach einem der Ansprüche 1 bis 12 zur festen Fixierung einer Aerosoldose (100) während einer Konifizierung der Aerosoldose (100).

## Claims

1. Conification system (50), the conification system (50) comprising:
- a clamping device (1) for firmly fixing an aerosol can (100) during conification of the aerosol can (100), the clamping device (1) comprising:
- a clamping sleeve (2), wherein the clamping sleeve (2) has on an internal side an accommodation cavity (3) for accommodating a portion (102) of a peripheral wall (101) of the aerosol can (100), and is arranged for variation between a release state for releasing the accommodated aerosol can (100) and a clamping state for contacting and application of an inwards directed clamping force (FS) on the portion (102) of the peripheral wall (101) of the accommodated aerosol can (100),
- an elastic deformation device (4), wherein the deformation device (4) encloses the clamping sleeve (2) on the circumferential side and is arranged for elastic deformation inwards for variation of the clamping sleeve (2) from its release state to its clamping state, and
- a fluid application device (8), wherein the fluid application device is arranged for application of a fluid (DF) having a pressure (p) to an exterior side (9) of the deformation device (4) for inwards deformation of the deformation device (4), and
- a conification device (51), wherein the conification device (51) is arranged for conification of the fixed aerosol can (100).

2. Conification system (50) according to claim 1,
- wherein a sleeve height (H2) of the clamping sleeve (2) and/or an accommodation cavity height (H3) of the accommodation cavity (3) are/is greater than an installation height (H4) of the deformation device (4) in an axial direction (z), and/or
- wherein a sleeve height (H2) of the clamping sleeve (2) and/or an accommodation cavity height (H3) of the accommodation cavity (3) in an axial direction (z) are/is a minimum of 10 mm and/or a maximum of 50 mm.

3. Conification system (50) according to any of the preceding claims,
- wherein the clamping sleeve (2) at one end (5) in an axial direction (z) is outwards widened on an internal side for inserting the portion (102) of the peripheral wall (101) of the aerosol can (100) into the accommodation cavity (3).

4. Conification system (50) according to any of the preceding claims,
- wherein an accommodation cavity internal distance (D3) of the accommodation cavity (3) is a minimum of 34 mm and/or a maximum of 70 mm.

5. Conification system (50) according to any of the preceding claims,
- wherein the clamping sleeve (2) has a circular cross-sectional shape, and/or
- wherein the accommodation cavity (3) has a circular cross-sectional shape, and/or
- wherein the deformation device (4) has a circular cross-sectional shape.

6. Conification system (50) according to any of the preceding claims,
- wherein the clamping sleeve (2) is closed.

7. Conification system (50) according to any of the preceding claims,
- wherein the clamping sleeve (2) in the circumferential direction (u) has a plurality of incisions (7), wherein each of the incisions (7) extends from one end (5) or from another end (6) of the clamping sleeve (2) with an incision length (L7) in an axial direction (z) of more than 50 % of a sleeve height (H2) of the clamping sleeve (2).

8. Conification system (50) according to claim 7,
- wherein the incisions (7) extend alternatingly from the one end (5) and the other end (6) of the clamping sleeve (2).

9. Conification system (50) according to claim 7 or 8,
- wherein the incisions (7) are arranged in uniform distribution in the circumferential direction (u).

10. Conification system (50) according to any of the preceding claims,
- wherein in the vicinity of the accommodation cavity (3) a sleeve wall thickness (T2) of the clamping sleeve (2) is a minimum of 2 mm and/or a maximum of 8 mm.

11. Conification system (50) according to any of the preceding claims,
- wherein the clamping sleeve (2) is partially or completely composed of a synthetic material, in particular polyether ketone and/or polyoxymethylene, and/or
- wherein the deformation device (4) is partially or completely composed of an elastomer, in particular composed of rubber.

12. Conification system (50) according to any of the preceding claims,
- wherein the deformation device (4) has or is an elastic membrane, wherein the membrane (4) encloses the clamping sleeve (2) on the circumferential side and is arranged for elastic bending inwards for variation of the clamping sleeve (2) from its release state to its clamping state.

13. Use of a clamping device (1) of a conification system (50) according to any of claims 1 to 12 for firmly fixing an aerosol can (100) during conification of the aerosol can (100).

## Revendications

1. Système de conification (50), le système de conification (50) comprenant :
- un dispositif de serrage (1) pour fixer solidement une bombe aérosol (100) pendant une conification de la bombe aérosol (100), le dispositif de serrage (1) comprenant :
- une gaine de serrage (2), la gaine de serrage (2) comprenant une chambre de réception intérieure (3) pour recevoir une section (102) d'une paroi circonférentielle (101) de la bombe aérosol (100) et étant configurée pour être modifiée entre un état de libération pour libérer la bombe aérosol (100) reçue et un état de serrage pour venir en contact avec et solliciter la section (102) de la paroi circonférentielle (101) de la bombe aérosol (100) reçue avec une force de serrage (FS) orientée vers l'intérieur,
- un appareil de déformation élastique (4), l'appareil de déformation (4) englobant circonférentiellement la gaine de serrage (2) et étant configuré pour se déformer élastiquement vers l'intérieur pour modifier la gaine de serrage (2) de son état de libération dans son état de serrage, et
- un appareil de sollicitation par fluide (8), l'appareil de sollicitation de fluide étant configuré pour solliciter un côté extérieur (9) de l'appareil de déformation (4) avec un fluide (DF) ayant une pression (p) pour déformer l'appareil de déformation (4) vers l'intérieur, et
- un dispositif de conification (51), le dispositif de conification (51) étant configuré pour conifier la bombe aérosol (100) fixée.

2. Système de conification (50) selon la revendication 1,
- dans lequel une hauteur de gaine (H2) de la gaine de serrage (2) et/ou une hauteur de chambre de réception (H3) de la chambre de réception (3) sont supérieures à une hauteur d'appareil (H4) de l'appareil de déformation (4) dans une direction axiale (z), et/ou
- dans lequel une hauteur de gaine (H2) de la gaine de serrage (2) et/ou une hauteur de chambre de réception (H3) de la chambre de réception (3) dans une direction axiale (z) sont d'au moins 10 mm et/ou d'au plus 50 mm.

3. Système de conification (50) selon l'une quelconque des revendications précédentes,
- dans lequel la gaine de serrage (2) est formée à une extrémité (5) dans une direction axiale (z) sur le côté intérieur sous une forme élargie vers l'extérieur pour l'insertion de la section (102) de la paroi circonférentielle (101) de la bombe aérosol (100) dans la chambre de réception (3).

4. Système de conification (50) selon l'une quelconque des revendications précédentes,
- dans lequel un écart intérieur de chambre de réception (D3) de la chambre de réception (3) est d'au moins 34 mm et/ou d'au plus 70 mm.

5. Système de conification (50) selon l'une quelconque des revendications précédentes,
- dans lequel la gaine de serrage (2) présente une forme de section transversale circulaire, et/ou
- dans lequel la chambre de réception (3) présente une forme de section transversale circulaire, et/ou
- dans lequel l'appareil de déformation (4) présente une forme de section transversale circulaire.

6. Système de conification (50) selon l'une quelconque des revendications précédentes,
- dans lequel la gaine de serrage (2) est fermée.

7. Système de conification (50) selon l'une quelconque des revendications précédentes,
- dans lequel la gaine de serrage (2) comprend dans la direction circonférentielle (u) une pluralité d'entailles (7), chacune des entailles (7) s'étendant depuis une extrémité (5) ou depuis une autre extrémité (6) de la gaine de serrage (2) avec une longueur d'entaille (L7) dans une direction axiale (z) de plus de 50 % d'une hauteur de gaine (H2) de la gaine de serrage (2).

8. Système de conification (50) selon la revendication 7,
- dans lequel les entailles (7) s'étendent en alternance depuis l'extrémité (5) et l'autre extrémité (6) de la gaine de serrage (2).

9. Système de conification (50) selon la revendication 7 ou 8,
- dans lequel les entailles (7) sont réparties uniformément dans la direction circonférentielle (u).

10. Système de conification (50) selon l'une quelconque des revendications précédentes,
- dans lequel, dans la zone de la chambre de réception (3), une épaisseur de paroi de gaine (T2) de la gaine de serrage (2) est d'au moins 2 mm et/ou d'au plus 8 mm.

11. Système de conification (50) selon l'une quelconque des revendications précédentes,
- dans lequel la gaine de serrage (2) est constituée en partie ou en totalité d'une matière plastique, notamment de polyéther-cétone et/ou de polyoxyméthylène, et/ou
- dans lequel l'appareil de déformation (4) est constitué en partie ou en totalité d'un élastomère, notamment de caoutchouc.

12. Système de conification (50) selon l'une quelconque des revendications précédentes,
- dans lequel l'appareil de déformation (4) comprend ou est une membrane élastique, la membrane (4) englobant circonférentiellement la gaine de serrage (2) et étant configurée pour se bomber élastiquement vers l'intérieur pour modifier la gaine de serrage (2) de son état de libération dans son état de serrage.

13. Utilisation d'un dispositif de serrage (1) d'un système de conification (50) selon l'une quelconque des revendications 1 à 12 pour fixer solidement une bombe aérosol (100) pendant une conification de la bombe aérosol (100).
